# EUROPÄISCHE PATENTSCHRIFT

(11) **EP 1 809 915 B1**
(45) Veröffentlichungstag und Bekanntmachung des Hinweises auf die Patenterteilung: **01.08.2012**
(21) Anmeldenummer: 05785109.9
(22) Anmeldetag: 05.10.2005
(51) Int. Cl.: F16B 21/08, F16B 19/00

(54) **BEFESTIGUNGSVORRICHTUNG**
FIXING DEVICE
DISPOSITIF DE FIXATION

(30) Priorität: 04.11.2004 DE 102004053190
(43) Veröffentlichungstag der Anmeldung: 25.07.2007
(73) Patentinhaber: A. RAYMOND ET CIE, 38000 Grenoble (FR)
(72) Erfinder: BOUBTANE, Mohieddine, 38170 Seyssinet-Pariset (FR)
(74) Vertreter: Rüttgers, Joachim
(86) Internationale Anmeldenummer: PCT/EP2005/010712
(87) Internationale Veröffentlichungsnummer: WO 2006/048094

(56) Entgegenhaltungen:
- US-A- 5 468 108

## Beschreibung

Die Erfindung betrifft eine Befestigungsvorrichtung gemäß dem Oberbegriff des Patentanspruches 1.

Eine derartige Befestigungsvorrichtung ist aus US-A-5,468,108 bekannt. Bei der vorbekannten Befestigungsvorrichtung sind an einem Fußschaft seitlich abstehende Lamellenflügel angeformt. An dem Fußschaft sind Längsrippen angesetzt, die in Längsrichtung des Fußschaftes verlaufen und vorstehen. Die Längsrippen erstrecken sich in die gleiche Richtung wie die Lamellenflügel und treten hinter sich in der gleichen Richtung erstreckende Lamellenflügel zurück, wobei jeweils zwei an gegenüberliegenden Seiten des Fußschaftes angesetzte Längsrippen seitlich zueinander versetzt angeordnet sind. Der Fußschaft hat in Querrichtung zwischen einander gegenüberliegenden Randbereichen eine Breite, die im wesentlichen im Durchmesser einer Ausnehmung entspricht, in die die Befestigungsvorrichtung eingefügt wird. Die Längsrippen weisen sich verjüngende Endbereiche auf, die voneinander in einem dem Durchmesser der Ausnehmung entsprechenden Abstand voneinander angeordnet sind. Dadurch ergibt sich eine gute Zentrierung innerhalb der Ausnehmung. Die vorbekannte Befestigungsvorrichtung ist mit ausreichender Auszugsfestigkeit jedoch nur in Ausnehmungen einfügbar, die mit ihrem Durchmesser dem Durchmesser der Befestigungsvorrichtung entsprechen.

Aus US-A-4,427,328 ist eine Befestigungsvorrichtung bekannt, bei der an einem länglichen Fußschaft mit einem rundlichen Querschnitt zwei Längsrippen angesetzt sind, die an einander gegenüberliegenden Seiten des Fußschaftes und miteinander fluchtend angeordnet sind. Zwischen den Längsrippen sind biegsame Lamellenflügel angeformt, die sich quer zu der Vorsprungsrichtung der Längsrippen erstrecken. Dadurch ist eine zuverlässige Verankerung der Befestigungsvorrichtung in Ausnehmungen sichergestellt, deren Dimension in einer Richtung dem Abstand zwischen den Längsrippen entsprechen. Bei dieser Befestigungsvorrichtung hat sich jedoch in gewisser Weise als nachteilig herausgestellt, dass bei nicht genau zu dem Abstand der Längsrippen dimensionierten Ausnehmungen ein gewisses Spiel auftritt, das unter Umständen zu unzureichenden Auszugkräften führen kann. Weiterhin ist die vorbekannte Befestigungsvorrichtung durch das Erfordernis der Passgenauigkeit zu der Ausnehmung, in die sie eingefügt werden soll, nicht immer einfach zu montieren.

Der Erfindung liegt die Aufgabe zugrunde, eine Befestigungsvorrichtung der eingangs genannten Art anzugeben, die sich bei einer relativ hohen Stabilität durch eine betriebssichere Verankerung auch in nicht ideal an die Befestigungsvorrichtung angepassten Ausnehmungen sowie durch eine einfache Montage auszeichnet.

Diese Aufgabe wird bei einer Befestigungsvorrichtung der eingangs genannten Art erfindungsgemäß mit den kennzeichnenden Merkmalen des Patentanspruches 1 gelöst.

Dadurch, dass sich bei der erfindungsgemäßen Befestigungsvorrichtung die Längsrippen in vier gleiche Richtungen wie die Lamellenflügel erstrecken und dass ein Paar von eingeformten Längsrippen eine Verbindung zwischen kürzeren und längeren Lamellenflügeln unter Stabilisierung insbesondere der kürzeren Lammelenflügel schafft, ist der Befestigungsvorrichtung ein hohes Maß an Stabilität auch bei Montage in nicht ideal angepassten Ausnehmungen verliehen, und auf Grund des durch die Paare von Lamellenflügel bewerkstelligten Toleranzausgleiches sowie der Führung durch die Längsrippen ist sie bei moderaten Einfügekräften verhältnismäßig einfach zu montieren.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Befestigungsvorrichtung, die zum Einfügen in längliche Ausnehmungen eingerichtet ist, und
- Fig. 2: das Ausführungsbeispiel gemäß Fig. 1 in einem Querschnitt.

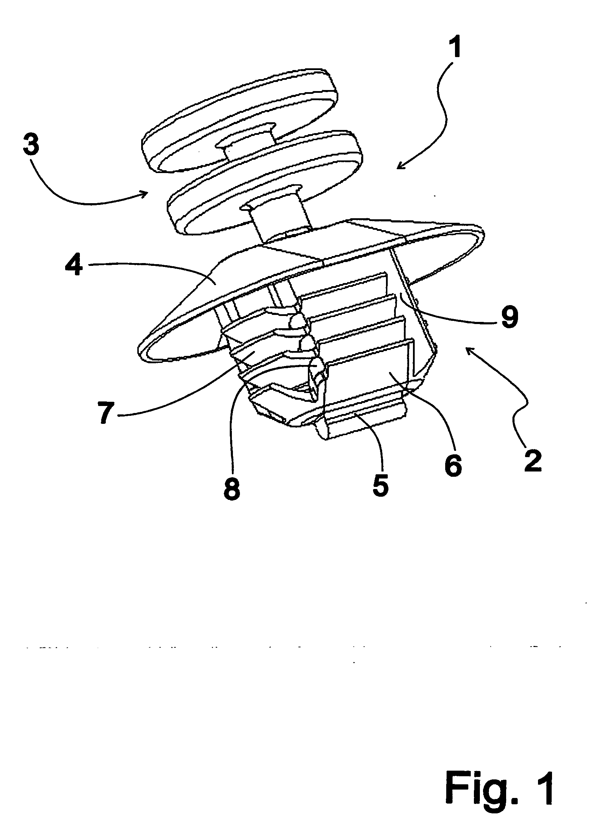

Fig. 1 zeigt in einer perspektivischen Ansicht ein Ausführungsbeispiel einer aus Kunststoff gefertigten erfindungsgemäßen Vorrichtung, die einen Kopfabschnitt 1 und einen Fußabschnitt 2 aufweist. Bei bestimmungsgemäßer Anordnung der erfindungsgemäßen Vorrichtung in eine Ausnehmung eines in Fig. 1 nicht dargestellten Trägerteiles steht der Kopfabschnitt 1 über das Trägerteil vor, während der Fußabschnitt 2 wenigstens abschnittsweise innerhalb der Ausnehmung des Trägerteiles angeordnet ist.

Bei dem Ausführungsbeispiel gemäß Fig. 1 ist der Kopfabschnitt 1 in an sich bekannter Art und Weise mit einer Flanschanordnung 3 sowie einem trichterförmigen, in Richtung des Fußabschnittes 2 geöffneten Abdeckschirm 4 ausgebildet, der bei bestimmungsgemäßer Anordnung der Befestigungsvorrichtung an einer Seite des Trägerteiles anliegt und die Ausnehmung abdeckt, in die der Fußabschnitt 2 eingefügt ist.

Der Fußabschnitt 2 verfügt über einen länglichen Fußschaft 5 mit einem im wesentlichen rechteckförmigen Querschnitt. An dem Fußschaft 5 sind zum einen in vier Richtungen seitlich abstehende und in Richtung des Kopfabschnittes 1 angestellte, biegsame längere Lamellenflügel 6 und kürzere Lamellenflügel 7 angeformt. Zum anderen sind an dem Fußschaft 5 zwei in durchgehenden Übergangsbereichen von längeren Lamellenflügeln 6 zu kürzeren Lamellenflügel 7 eingeformte Längsrippen 8 und zwei freistehende Längsrippen 9 angesetzt, die in jeweils einem zwischen längeren Lamellenflügeln 6 sowie kürzeren Lamellenflügeln 7 ausgebildeten Freibereich angeordnet sind. Die Längsrippen 8, 9 verlaufen in Längsrichtung des Fußschaftes 5 im wesentlichen über den gesamten Fußabschnitt 2 und erstrecken sich in die gleiche Richtung wie die Lamellenflügel 6, 7 von dem Fußschaft 5 weg.

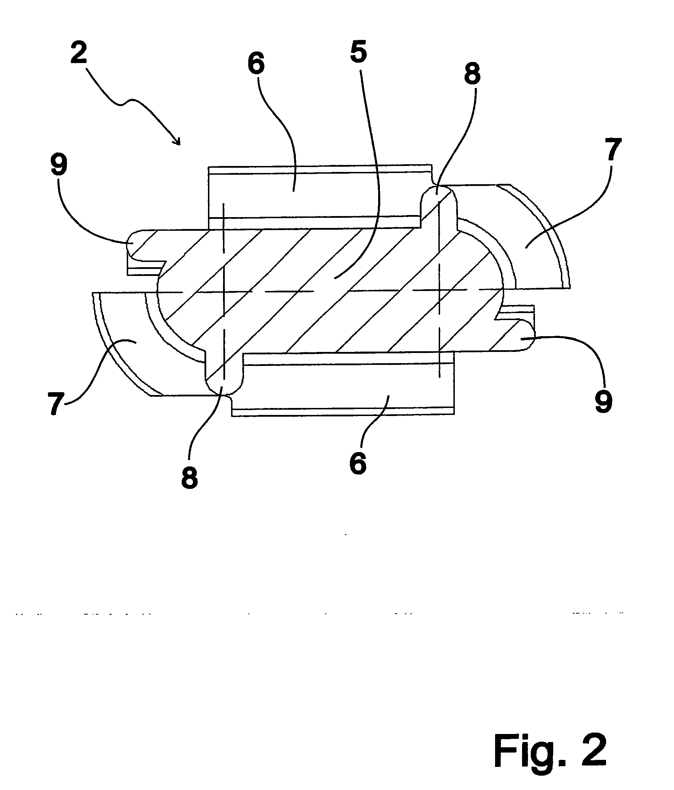

Fig. 2 zeigt das Ausführungsbeispiel gemäß Fig. 1 in einem Querschnitt im Bereich des Randes des Abdeckschirmes 4 mit Blick in Richtung des freien Endes des Fußabschnittes 2. Aus Fig. 2 ist ersichtlich, dass die beiden eingeformten Längsrippen 8 sowohl mit den ihnen benachbarten längeren Lamellenflügeln 6 als auch den ihnen benachbarten kürzeren Lamellenflügeln 7 direkt verbunden sind, während die freistehenden Längsrippen 9 in etwa mittig zwischen aufeinander zu weisenden Randseiten von längeren Lamellenflügeln 6 und kürzeren Lamellenflügeln 7 angeordnet sind.

Weiterhin ist Fig. 2 zu entnehmen, dass sowohl die eingeformten Längsrippen 8 als auch die freistehenden Längsrippen 9 in Bezug auf die Mittellinien des Fußabschnittes 2 seitlich zueinander versetzt und jeweils in Randbereichen der kürzeren sowie der längeren Randseiten des Fußschaftes 5 angeordnet sind. Die Längsrippen 8, 9 stehen jeweils in einer Vorsprungsrichtung über den Fußschaft 5 vor, treten jedoch hinter die sich in gleicher Richtung erstreckenden Lamellenflügeln 6, 7 zurück.

Dadurch ist zum einen eine gewisse Stabilisierung insbesondere der kürzeren Lamellenflügel 7, zum anderen jedoch unter Toleranzausgleich durch die Lamellenflügel 6, 7 eine gewisse Führung durch die Längsrippen 8, 9 beim Einfügen des Fußabschnittes 2 in die Ausnehmung des Trägerteiles erzielt.

Weiterhin ist als Vorteil der erfindungsgemäßen Befestigungsvorrichtung zu vermerken, dass sie in kostengünstiger Weise in einer einfachen Form frei von Schlitten zur Entformung herstellbar ist.

## Patentansprüche

1. Befestigungsvorrichtung mit an einem Fußschaft (5) angeformten, seitlich abstehenden Lamellenflügeln (6, 7) und an dem Fußschaft (5) angesetzten sowie in Längsrichtung des Fußschaftes (5) verlaufenden, vorstehenden Längsrippen (8, 9), wobei die Längsrippen (8, 9) sich in die gleiche Richtung wie die Lamellenflügel (6, 7) erstrecken sowie hinter sich in der gleichen Richtung erstreckende Lamellenflügel (6, 7) zurücktreten und wobei jeweils zwei an gegenüberliegenden Seiten des Fußschaftes (5) angesetzte Längsrippen (8, 9) seitlich zueinander versetzt angeordnet sind, **dadurch gekennzeichnet, dass** an dem Fußschaft (5) in vier Richtungen seitlich abstehende kürzere und längere Lamellenflügel (6, 7) angeformt sind, dass an dem Fußschaft (5) zwei in durchgehenden Übergangsbereichen von längeren Lamellenflügeln (6) zu kürzeren Lamellenflügeln (7) eingeformte Längsrippen (8) und zwei freistehende Längsrippen (9) angesetzt sind, die in jeweils einem zwischen längeren Lamellenflügeln (6) sowie kürzeren Lamellenflügeln (7) ausgebildeten Freibereich angeordnet sind, und dass die beiden eingeformten Längsrippen (8) sowohl mit den ihnen benachbarten längeren Lamellenflügeln (6) als auch mit den ihnen benachbarten kürzeren Lamellenflügeln (7) direkt verbunden sind.

2. Befestigungsvorrichtung nach Anspruch 1, **dadurch gekennzeichnet, dass** der Fußschaft (5) einen rechteckförmigen Querschnitt aufweist und dass die Längsrippen (8, 9) in Randbereichen der längeren und kürzeren Randseiten des Fußschaftes (5) angeordnet sind.

## Claims

1. Fastener, having laterally projecting fins (6, 7) integrally formed on a bottom shank (5) and having projecting longitudinal ribs (8, 9) which are attached to the bottom shank (5) and which extend in the longitudinal direction of the bottom shank (5), with the longitudinal ribs (8, 9) extending in the same direction as the fins (6, 7) but not projecting outwards as far as fins (6, 7) extending in the same direction and with each two longitudinal ribs (8, 9) attached to opposite sides of the bottom shank (5) being arranged to be offset from one another laterally, **characterised in that** there are integrally formed on the bottom shank (5) shorter and longer fins (6, 7) which project laterally in four directions, **in that** there are attached to the bottom shank (5) two longitudinal ribs (8) which are formed to be positioned in continuous transitional regions from longer fins (6) to shorter fins (7) and two longitudinal ribs (9) which are free-standing and which are arranged in respective free regions formed between longer fins (6) and shorter fins (7), and **in that** the two longitudinal ribs (8) which are formed to be positioned are directly connected both to the longer fins (6) adjacent to them and to the- shorter fins (7) adjacent to them.

2. Fastener according to claim 1, **characterised in that** the bottom shank (5) is rectangular in cross-section and **in that** the longitudinal ribs (8, 9) are arranged in edge regions of the longer and shorter edge-faces of the bottom shank (5).

## Revendications

1. Organe de fixation comportant des ailettes lamelliformes (6, 7) faisant saillie dans le plan latéral, réalisées solidaires par formage d'une patte d'ancrage en position (5) et des nervures longitudinales en saillie (8, 9) disposées attenantes à la patte d'ancrage en position (5) et s'étendant dans le sens longitudinal de la patte d'ancrage en position (5), les nervures longitudinales (8, 9) s'étendant en l'occurrence dans la même direction que les ailettes lamelliformes (6, 7) et étant également disposées en retrait derrière les ailettes lamelliformes (6, 7) s'étendant dans la même direction, et dans lequel deux nervures longitudinales (8, 9) respectivement attenantes aux côtés opposés de la patte d'ancrage en position (5) sont disposées dans le plan latéral décalées l'une par rapport à l'autre, **caractérisé en ce que** des ailettes lamelliformes relativement courtes et relativement longues (6, 7) faisant saillie dans quatre directions dans le plan latéral sont réalisées solidaires par moulage de la patte d'ancrage en position (5), **en ce que** sont disposées attenantes à la patte d'ancrage en position (5) deux nervures longitudinales (8) réalisées solidaires par moulage dans les zones de transition continues entre les ailettes lamelliformes relativement longues (6) et les ailettes lamelliformes relativement courtes (7) et deux nervures longitudinales libres (9), qui sont respectivement disposées dans un espace libre ménagé entre les ailettes lamelliformes relativement longues (6) ainsi qu'entre les ailettes lamelliformes relativement courtes (7), et **en ce que** les deux nervures longitudinales rendues solidaires par moulage (8) sont directement raccordées à la fois aux ailettes lamelliformes relativement longues (6) contigües et à la fois aux ailettes lamelliformes relativement courtes (7) contigües.

2. Organe de fixation selon la revendication 1, **caractérisé en ce que** la patte d'ancrage en position (5) a une section rectangulaire et **en ce que** les nervures longitudinales (8, 9) sont disposées dans les portions d'extrémité des grands et des petits côtés de la patte d'ancrage en position (5).
